# EUROPEAN PATENT APPLICATION

(11) **EP 4 386 530 A1**
(43) Date of publication of application: **19.06.2024**
(21) Application number: 22866698.8
(22) Date of filing: 08.09.2022
(51) Int. Cl.: G06F 3/0481, G06F 3/0488

(54) **CONTENT EDITING METHOD AND APPARATUS AND ELECTRONIC DEVICE**

(30) Priority: 13.09.2021 CN 202111069337
(71) Applicant: Vivo Mobile Communication Co., Ltd., Dongguan, Guangdong 523863 (CN)
(72) Inventor: LIANG, Qijian, Dongguan, Guangdong 523863 (CN)
(74) Representative: Murgitroyd & Company
(86) International application number: PCT/CN2022/117795
(87) International publication number: WO 2023/036237

(57) **Abstract**

This application discloses a content editing method and apparatus, and an electronic device. The method includes: in a case that a first edit box in a target interface is displayed, receiving a first input of a user; in response to the first input, in a case that a preset condition is met, displaying a target window; receiving a second input of the user to an input method keyboard; and in response to the second input, displaying, in the target window, first content corresponding to the second input, and displaying, in the first edit box, content displayed in the target window, where a display size of the target window is greater than a display size of the first edit box.

## Description

### CROSS-REFERENCE TO RELATED APPLICATION

This application claims priority to Chinese Patent Application No. 202111069337.4 filed in China on September 13, 2021, which is incorporated herein by reference in its entirety.

### TECHNICAL FIELD

This application pertains to the field of communication technologies, and specifically relates to a content editing method and apparatus, and an electronic device.

### BACKGROUND

Currently, in a process in which a user performs communication by using a chat tool, if the user wants to send a piece of text by using the chat tool, the user may directly enter a piece of text into an input box of a chat interface of the chat tool, so that the user can trigger an electronic device to send the text by using the chat tool.

However, when content of the piece of text is relatively long, because a size of an edit box of the chat interface is relatively small, when the user triggers the electronic device to edit a long piece of text directly in the edit box of the chat interface, it is relatively difficult to edit the text. The user can only first trigger the electronic device to edit a relatively long piece of text in an edit interface of an edit-type application, and then copy the piece of text and paste it to the edit box. In this way, it is relatively cumbersome to edit relatively long content (for example, text) by using the electronic device.

### SUMMARY

Embodiments of this application aim to provide a content editing method and apparatus, and an electronic device, to resolve a problem that it is relatively cumbersome to edit relatively long content by using an electronic device.

To resolve the foregoing technical problem, this application is implemented as follows:
According to a first aspect, an embodiment of this application provides a content editing method. The method includes: in a case that a first edit box in a target interface is displayed, receiving a first input of a user; in response to the first input, in a case that a preset condition is met, displaying a target window; receiving a second input of the user to an input method keyboard; and in response to the second input, displaying, in the target window, first content corresponding to the second input, and displaying, in the first edit box, the content displayed in the target window, where a display size of the target window is greater than a display size of the first edit box.

According to a second aspect, an embodiment of this application provides a content editing apparatus. The content editing apparatus includes: a receiving module, a display module, and a processing module. The receiving module may be configured to: in a case that a first edit box in a target interface is displayed, receive a first input of a user. The display module may be configured to: in response to the first input received by the receiving module, in a case that a preset condition is met, display a target window. The receiving module may be further configured to receive a second input of the user to an input method keyboard. The display module may be further configured to: in response to the second input received by the receiving module, display, in the target window, first content corresponding to the second input, and display, in the first edit box, the content displayed in the target window, where a display size of the target window is greater than a display size of the first edit box.

According to a third aspect, an embodiment of this application provides an electronic device. The electronic device includes a processor, a memory, and a program or an instruction stored in the memory and executable on the processor. When the program or the instruction is executed by the processor, steps of the method according to the first aspect are implemented.

According to a fourth aspect, an embodiment of this application provides a readable storage medium. The readable storage medium stores a program or an instruction. When the program or the instruction is executed by a processor, steps of the method according to the first aspect are implemented.

According to a fifth aspect, an embodiment of this application provides a chip. The chip includes a processor and a communication interface, the communication interface is coupled to the processor, and the processor is configured to run a program or an instruction, to implement the method according to the first aspect.

In the embodiments of this application, in a case that the first edit box in the target interface is displayed, the first input of the user is received; in response to the first input, in a case that the preset condition is met, the target window is displayed; the second input of the user to the input method keyboard is received; and in response to the second input, the first content corresponding to the second input is displayed in the target window, and the content displayed in the target window is displayed in the first edit box, where the display size of the target window is greater than the display size of the first edit box. In this solution, in a case that the edit box in the target interface is displayed, the user may trigger to display the target window through the input that meets the preset condition. Therefore, when the user triggers to display a particular piece of content in the target window through the input to the input method keyboard, the content displayed in the target window may be displayed in the edit box synchronously. In this way, when the user wants to edit relatively long content, the user only needs to trigger to edit required content in the target window, so that the electronic device can display, in the edit box of the target interface (for example, the chat interface) synchronously, the content displayed in the target window. Further, the user does not need to copy and paste the content into the edit box of the chat interface by triggering, in advance, to edit the content by using another edit-type application. In this way, an operation of editing relatively long content by the electronic device is simplified.

### BRIEF DESCRIPTION OF DRAWINGS

FIG. 1 is a schematic diagram of a content editing method according to an embodiment of this application;
FIG. 2 is a first schematic diagram of a content edit interface according to an embodiment of this application;
FIG. 3 is a second schematic diagram of a content edit interface according to an embodiment of this application;
FIG. 4 is a schematic diagram of an interface of sending edited content according to an embodiment of this application;
FIG. 5 is a schematic structural diagram of a content editing apparatus according to an embodiment of this application;
FIG. 6 is a schematic structural diagram of an electronic device according to an embodiment of this application; and
FIG. 7 is a schematic diagram of hardware of an electronic device according to an embodiment of this application.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and the claims of this application are used to distinguish between similar objects instead of describing a specific order or sequence. It should be understood that the data used in such a way is interchangeable in proper circumstances, so that the embodiments of this application can be implemented in an order other than the order illustrated or described herein. In addition, in this specification and the claims, "and/or" represents at least one of connected objects, and the character "/" generally represents an "or" relationship between associated objects.

In the embodiments of this application, the expression such as "example" or "for example" is used to represent giving an example, an illustration, or a description. Any embodiment or design scheme described as "exemplary" or "an example" in the embodiments of this application should not be construed as being preferable or advantageous than other embodiments or design schemes. Exactly, use of the expression "example" or "for example" is intended to present a related concept in a specific manner.

In the descriptions of the embodiments of this application, unless otherwise stated, "a plurality of" means two or more, for example, a plurality of elements mean two or more elements, or the like.

Embodiments of this application provide a content editing method and apparatus, and an electronic device. The method includes: in a case that a first edit box in a target interface is displayed, receiving a first input of a user; in response to the first input, in a case that a preset condition is met, displaying a target window; receiving a second input of the user to an input method keyboard; and in response to the second input, displaying, in the target window, first content corresponding to the second input, and displaying, in the first edit box, the content displayed in the target window, where a display size of the target window is greater than a display size of the first edit box. In this solution, in a case that the edit box in the target interface is displayed, the user may trigger to display the target window through the input that meets the preset condition. Therefore, when the user triggers to display a particular piece of content in the target window through the input to the input method keyboard, the content displayed in the target window may be displayed in the edit box synchronously. In this way, when the user wants to edit relatively long content, the user only needs to trigger to edit required content in the target window, so that the electronic device can display, in the edit box of the target interface (for example, the chat interface) synchronously, the content displayed in the target window. Further, the user does not need to copy and paste the content into the edit box of the chat interface by triggering, in advance, to edit the content by using another edit-type application. In this way, an operation of editing relatively long content by the electronic device is simplified.

The content editing method and apparatus and the electronic device provided in the embodiments of this application are described in detail below through specific embodiments and application scenarios with reference to the accompanying drawings.

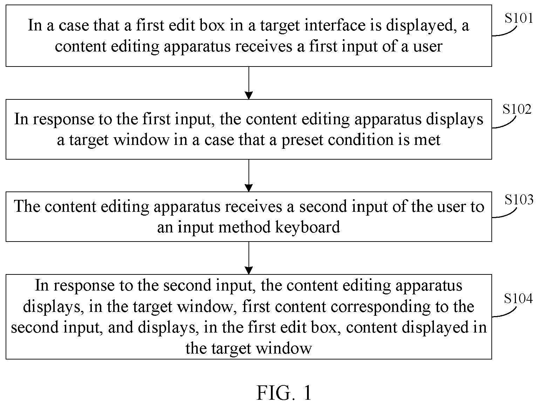

As shown in FIG. 1, an embodiment of this application provides a content editing method. The method includes the following S101 to S104.

S101: In a case that a first edit box in a target interface is displayed, a content editing apparatus receives a first input of a user.

Optionally, the target interface may be a chat interface of any communication application, a chat interface of another application having a chat function, or any other interface that may have an edit box. The application corresponding to the target interface may be a system application or a third-party application.

Further, the target interface may be a chat interface for a one-to-one session, or a chat interface for a session with more than two people. Details may be determined according to an actual use condition. This is not limited in the embodiments of this application.

Optionally, the first input may be a touch input, a voice input, or a gesture input of the user. For example, the touch input is a two-finger-zoom-in input of the user to an input method area. Certainly, the first input may alternatively be another possible input. This is not limited in the embodiments of this application.

S102: In response to the first input, the content editing apparatus displays a target window in a case that a preset condition is met.

A display size of the target window is greater than a display size of the first edit box.

Optionally, the target window may be an edit box or another window having an edit function. Further, a display size parameter of the target window may include at least one of the following: a length, a width, an area, a perimeter, and the like.

For example, when the display size parameter is the length, the length of the target window is greater than the length of the first edit box; or when the display size parameter is the area, the area of the target window is greater than the area of the first edit box.

Optionally, the target window may be specifically displayed in the following three possible implementations:
(1) The target window is displayed on the target interface in a hovering manner.
(2) Displaying of the target interface is canceled, and the target window is displayed.
(3) The first edit box is displayed, and the target window is displayed, to be specific, the first edit box and the target window are displayed in a split-screen manner.

Optionally, the preset condition may include any one of the following: the first input is a preset input to an input method area corresponding to the input method keyboard, where the first input is an input to a preset control; or in a case that the first input is used to input second content to the first edit box, the preset condition may include any one of the following: a quantity of display rows of the second content is greater than or equal to a preset threshold of a quantity of display rows; and the second content includes a preset identifier, where the preset identifier is used to indicate that the second content is templated text.

Optionally, the preset control is a control for triggering the display of the target window; and the preset identifier may be any one of the following: a figure, a number, a symbol, and the like.

Optionally, the second content may include any one of the following: text, a symbol, an emoticon, a picture, and the like.

Optionally, in a case that the quantity of display rows of the second content is greater than or equal to the preset threshold of a quantity of display rows, because the target window may be displayed, the target window includes the second content. In this way, the user does not need to re-trigger to edit the second content in the target window, and may continue to trigger to edit new content.

Optionally, before the foregoing S102, the content editing method provided in the embodiments of this application may further include: The content editing apparatus determines whether the preset condition is met. If the preset condition is met, the foregoing S 102 is performed; or if the preset condition is not met, no processing is performed.

S 103: The content editing apparatus receives a second input of the user to the input method keyboard.

Optionally, the input method keyboard is a virtual keyboard installed in the electronic device, and the input method keyboard may be any type of input method keyboard in the electronic device. Details may be determined according to an actual situation. This is not limited in the embodiments of this application. For example, the input method keyboard is a 9-key keyboard for the Pinyin input method. For another example, the input method keyboard is a 26-key keyboard for the Pinyin input method.

Optionally, the second input may be a touch input, a voice input, a gesture input, or the like of the user. For example, the touch input is an input of tapping a character key on the input method keyboard by the user. Certainly, the second input may alternatively be another possible input. This is not limited in the embodiments of this application.

Optionally, after the foregoing S102 and before S 103, the content editing method provided in the embodiments of this application may further include: The content editing apparatus receives an input of the user, and in response to the input, displays an input method keyboard.

S104: In response to the second input, the content editing apparatus displays, in the target window, first content corresponding to the second input, and displays, in the first edit box, the content displayed in the target window.

Optionally, the first content may include any one of the following: text, a symbol, an emoticon, a picture, and the like.

Further, the first content is determined by the second input to a character key on the input method keyboard. When the second input is performed on different character keys, different first content is obtained.

It should be noted that, it is assumed that the first content includes M pieces of sub-content, where M is an integer greater than 1. Each time the user performs an input to the input method keyboard to trigger to display one piece of sub-content in the target window, the content editing apparatus may automatically display, in the first edit box synchronously, the sub-content displayed in the target window. Therefore, when the first content is displayed in the target window, the first content displayed in the target window is displayed in the first edit box synchronously.

Optionally, after the first content is displayed in the target window, the content editing method provided in the embodiments of this application may further include: The content editing apparatus receives an input to the target window; and in response to the input, display the first content in a scrolling manner. In this way, the user may trigger to display the first content in a scrolling manner according to an actual use requirement, so that the user can view the first content one by one.

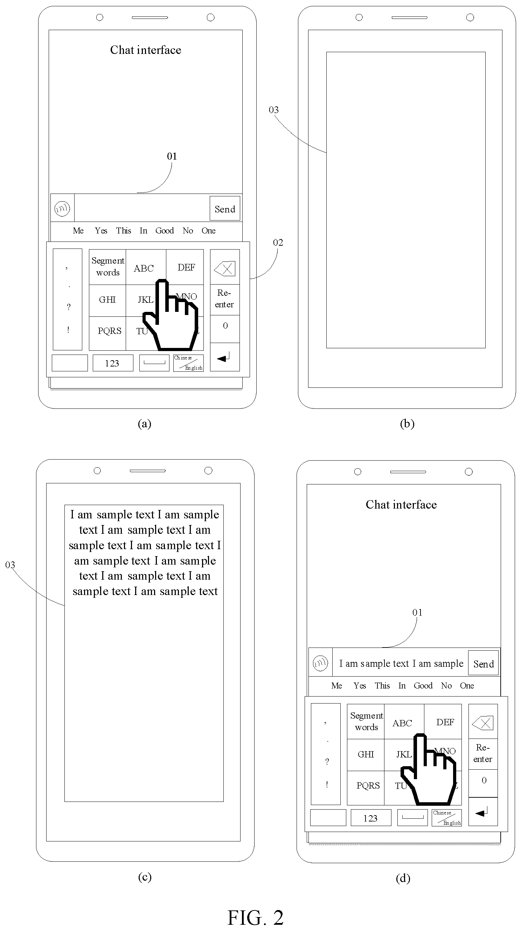

For example, the content editing apparatus is a mobile phone and the first content is text. As shown in (a) in FIG. 2, the mobile phone displays a chat interface. The chat interface includes an edit box 01. The user performs a two-finger-zoom-in operation on an input method area 02. After receiving the two-finger-zoom-in input to the input method area 02, in response to the two-finger-zoom-in input, the mobile phone may display a target window 03, as shown in (b) in FIG. 2. If the user taps a character key on an input method keyboard corresponding to the input method area 02, after receiving the input of tapping the character key (that is, the second input), in response to the input, as shown in (c) in FIG. 2, the mobile phone may display text "I am sample text I am sample text I am sample text" (that is, the first content) in the target window 03. Then, in a case that the mobile phone switches to display the chat interface, as shown in (d) in FIG. 2, the first content is displayed in the edit box 01.

This embodiment of this application provides a content editing method. In a case that the edit box in the target interface is displayed, the user may trigger to display the target window through the input that meets the preset condition. Therefore, when the user triggers to display a particular piece of content in the target window through the input to the input method keyboard, the content displayed in the target window may be displayed in the edit box synchronously. In this way, when the user wants to edit relatively long content, the user only needs to trigger to edit required content in the target window, so that the electronic device can display, in the edit box of the target interface (for example, the chat interface) synchronously, the content displayed in the target window. Further, the user does not need to copy and paste the content into the edit box of the chat interface by triggering, in advance, to edit the content by using another edit-type application. In this way, an operation of editing relatively long content by the electronic device is simplified.

Optionally, when the user needs to edit templated content, the user may trigger to change an edit mode of the target window. For example, after the foregoing S102 and before S103, the content editing method provided in the embodiments of this application may further include S105 to S107. Correspondingly, the foregoing S104 may be specifically implemented through the following S104A.

S105: The content editing apparatus displays at least one template.

Each template in the at least one template corresponds to one edit mode.

Optionally, the at least one template may be factory-set by a manufacturer, or is user-defined. Certainly, in a case that the user is not satisfied with a particular template, the user may trigger the electronic device to modify the template.

Further, the at least one template may be displayed in a left area, a right area, or another blank area of a screen.

For example, a template may be a number template, a bullet template, or another possible type of template.

In a case that the at least one template is user-dined, before the foregoing S105, the content editing method provided in the embodiments of this application may further include: The content editing apparatus receives an input of the user; and in response to the input, creates at least one template. In this way, in a case that a preset template is insufficient for use, the user may create, according to a requirement, a template that is more in line with an expectation, that is, usability of the template is improved.

S106: The content editing apparatus receives a third input of the user to a target template in the at least one template.

Optionally, the third input may be a touch input, a voice input, a gesture input, or the like of the user for the target template. For example, the touch input is a tap input of the user to the target template. Certainly, the third input may alternatively be another possible input. This is not limited in the embodiments of this application.

S107: In response to the third input, the content editing apparatus updates the edit mode of the target window from a first edit mode to a second edit mode corresponding to the target template.

Optionally, the first edit mode is the edit mode of the target window before the third input is received. The second edit mode is an edit mode different from the first edit mode.

S104A: In response to the second input, the content editing apparatus displays, in the target window, the first content in the second edit mode, and displays, in the first edit box, the first content displayed in the second edit mode.

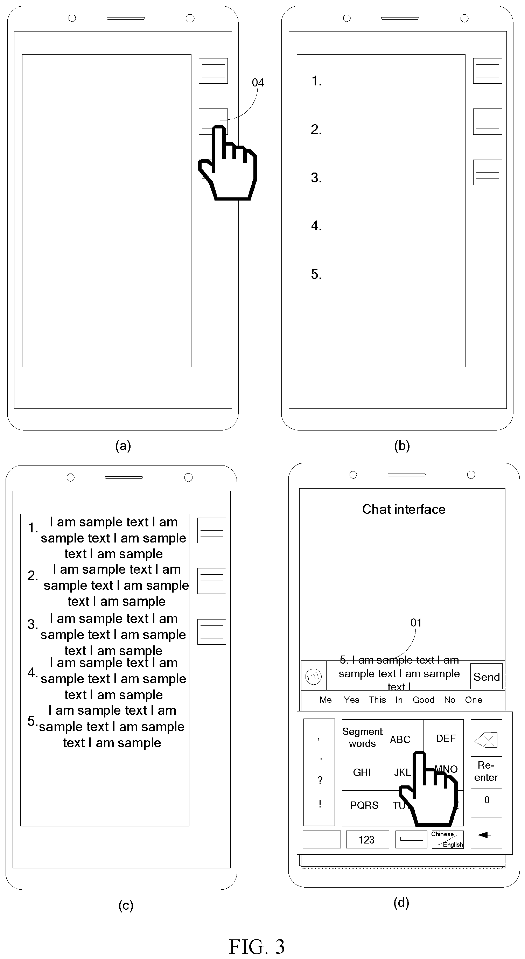

For example, with reference to FIG. 2, as shown in (a) in FIG. 3, the mobile phone further displays three templates, and each template corresponds to one edit mode. If the user wants to update the edit mode of the target window to an edit mode required by the user, the user may tap a template 04 in (a) in FIG. 3. After receiving the tap input to the template 04, in response to the tap input, the mobile phone may update the edit mode of the target window from an edit mode shown in (b) in FIG. 2 (that is, the first edit mode) to an edit mode corresponding to the template 04 shown in (b) in FIG. 3 (that is, the second edit mode). In this way, as shown in (c) in FIG. 3, the first content is displayed in the target window in the second edit mode, and the first content displayed in the second edit mode is displayed in the first edit box 01. Further, in a case that the mobile phone switches to display the chat interface, as shown in (d) in FIG. 3, the first content displayed in the second edit mode is displayed in the first edit box 01.

In the content editing method provided in the embodiments of this application, when the at least one template is displayed, if a current edit mode of the target window does not satisfy a use requirement of the user, the user may trigger, through an input to a particular template in the at least one template, to update the edit mode of the target window from a current mode to an edit mode corresponding to the template, so that the user can trigger the electronic device to quickly edit content in the target window whose edit mode has been updated to the new edit mode, that is, editing of templated content is facilitated.

Optionally, after editing the content by using the target window, the user may send edited content to a friend. For example, after the foregoing S104, the content editing method provided in the embodiments of this application may further include S108 to S111.

S108: The content editing apparatus receives a fourth input of the user.

Optionally, the fourth input may be a touch input, a voice input, a gesture input, or the like of the user. For example, the touch input is a tap input of the user to a first control in the target window. The first control is used to trigger to close the target window. For another example, the touch input is an input of a two-finger-pinch operation on the input method area. Certainly, the fourth input may alternatively be another possible input. This is not limited in the embodiments of this application.

S109: The content editing apparatus displays the first edit box in response to the fourth input.

The first content is displayed in the first edit box.

Optionally, for the description "displays the first edit box" in the foregoing S109, the following three possible implementations may be specifically included:
(1) The target window is minimized, and the first edit box is displayed.
(2) The target window is closed, and the first edit box is displayed.
   For example, the user may trigger to close the target window by tapping a control; or the user may perform a two-finger-pinch operation on the input method area corresponding to the input method keyboard, to trigger to close the target window.
(3) The target window is zoomed out, and the first edit box is displayed. To be specific, the target window and the first edit box are displayed in a split-screen manner.

Optionally, the target window includes a cursor, where the cursor is located in a first area in the target window. The foregoing S109 may be specifically implemented through the following S109A.

S109A: The content editing apparatus displays the first edit box, and displays the cursor in a second area in the first edit box.

Content displayed in the second area is the same as content displayed in the first area.

For example, if the cursor in the target window is located in the first area in which "I am sample text" is displayed, and the cursor is displayed behind a position of text "text" in the first area, the cursor in the first edit box is also located in the second area in which "I am sample text" is displayed, and the cursor is displayed behind a position of text "text" in the second area. In this way, the content displayed in the second area is the same as the content displayed in the first area.

S110: The content editing apparatus receives a fifth input of the user.

Optionally, the fifth input may be a touch input, a voice input, a gesture input, or the like of the user. For example, the touch input is a tap input of the user to a second control, where the second control is used to trigger to send content input to the first edit box. Certainly, the fifth input may alternatively be another possible input. This is not limited in the embodiments of this application.

S111: In response to the fifth input, the content editing apparatus sends the first content through an application corresponding to the target interface, and displays the first content in the target interface.

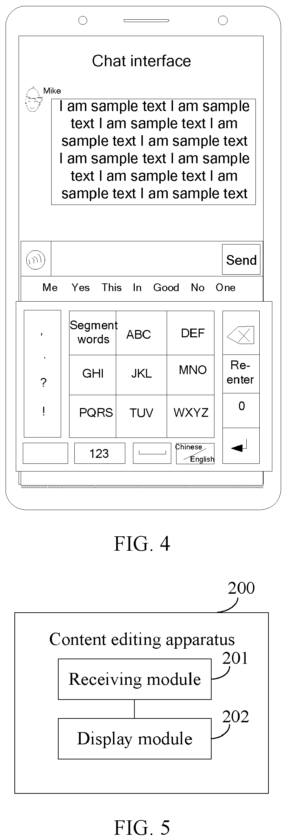

For example, with reference to FIG. 2, after editing the first content in the target window 03, the user may tap a control in the target window 03. After receiving the tap input to the control, in response to the tap input, the mobile phone may cancel displaying the target window 03, and as shown in (d) in FIG. 2, the mobile phone displays the chat interface, where the edit box 01 in the chat interface includes the first content. If the user wants to share the first content with a friend, the user may tap a "send" control in the chat interface. After receiving the tap input to the "send" control, in response to the tap input, the mobile phone may send the first content through an application corresponding to the chat interface, and as shown in FIG. 4, display, in the chat interface, a chat message of a user with a nickname "Mike": the first content.

In the content editing method provided in the embodiments of this application, the first content is displayed in the target window, and after the content displayed in the target window is displayed in the first edit box, the user may trigger, through an input, to display the first edit box, and then trigger, through another input, to send the first content through the application corresponding to the target interface, and the first content is displayed in the target interface, so that the user can share the content edited by using the target window with another user.

It should be noted that, the content editing method provided in the embodiments of this application may be performed by the content editing apparatus (for example, the content editing apparatus may be an electronic device, or an external device on the electronic device), or a control module that is in the content editing apparatus and that is configured to perform the content editing method. In embodiments of this application, that the content editing apparatus performs the content editing method is used as an example to describe the content editing apparatus provided in embodiments of this application.

As shown in FIG. 5, an embodiment of this application provides a content editing apparatus 200. The content editing apparatus includes a receiving module 201 and a display module 202. The receiving module 201 may be configured to: in a case that a first edit box in a target interface is displayed, receive a first input of a user. The display module 202 may be configured to: in response to the first input received by the receiving module 201, in a case that a preset condition is met, display a target window. The receiving module 201 may be further configured to receive a second input of the user to an input method keyboard. The display module 202 may be further configured to: in response to the second input received by the receiving module 201, display, in the target window, first content corresponding to the second input, and display, in the first edit box, the content displayed in the target window, where a display size of the target window is greater than a display size of the first edit box.

Optionally, the preset condition may include any one of the following: the first input is a preset input to an input method area corresponding to the input method keyboard, where the first input is an input to a preset control; or in a case that the first input is used to input second content to the first edit box, the preset condition includes any one of the following: a quantity of display rows of the second content is greater than or equal to a preset threshold of a quantity of display rows; and the second content includes a preset identifier, where the preset identifier is used to indicate that the second content is templated text.

Optionally, the display module 202 may be further configured to display at least one template, where each template in the at least one template corresponds to one edit mode. The receiving module 201 may be further configured to receive a third input of the user to a target template in the at least one template. The processing module 203 may be further configured to: in response to the third input received by the receiving module 201, update an edit mode of the target window from a first edit mode to a second edit mode corresponding to the target template. The display module 202 may be specifically configured to: display the first content in the target window in the second edit mode, and display, in the first edit box, the first content displayed in the second edit mode.

Optionally, the content editing apparatus further includes a processing module 203. The receiving module 201 may be further configured to receive a fourth input of the user. The display module 202 may be further configured to: in response to the fourth input received by the receiving module 201, display the first edit box, where the first content is displayed in the first edit box. The receiving module 201 may be further configured to receive a fifth input of the user. The processing module 203 may be configured to: in response to the fifth input received by the receiving module 201, send the first content through an application corresponding to the target interface. The display module 202 may be further configured to display the first content in the target interface.

Optionally, the target window includes a cursor, and the cursor is located in a first area in the target window. The display module 202 may be specifically configured to: display the first edit box, and display the cursor in a second area in the first edit box, where content displayed in the second area is the same as content displayed in the first area.

This embodiment of this application provides a content editing apparatus. In a case that the edit box in the target interface is displayed, the user may trigger to display the target window through the input that meets the preset condition. Therefore, when the user triggers to display a particular piece of content in the target window through the input to the input method keyboard, the content displayed in the target window may be displayed in the edit box synchronously. In this way, when the user wants to edit relatively long content, the user only needs to trigger to edit required content in the target window, so that the electronic device can display, in the edit box of the target interface (for example, the chat interface) synchronously, the content displayed in the target window. Further, the user does not need to copy and paste the content into the edit box of the chat interface by triggering, in advance, to edit the content by using another edit-type application. In this way, an operation of editing relatively long content by the electronic device is simplified.

The content editing apparatus in the embodiments of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), a teller machine, a self-service machine, or the like. This is not specifically limited in the embodiments of this application.

The content editing apparatus in the embodiments of this application may be an apparatus with an operating system. The operating system may be an Android (Android) operating system, an iOS operating system, or another possible operating system. This is not specifically limited in the embodiments of this application.

The content editing apparatus provided in the embodiments of this application can implement each process implemented in the method embodiment in FIG. 1 to FIG. 4. To avoid repetition, details are not described herein again.

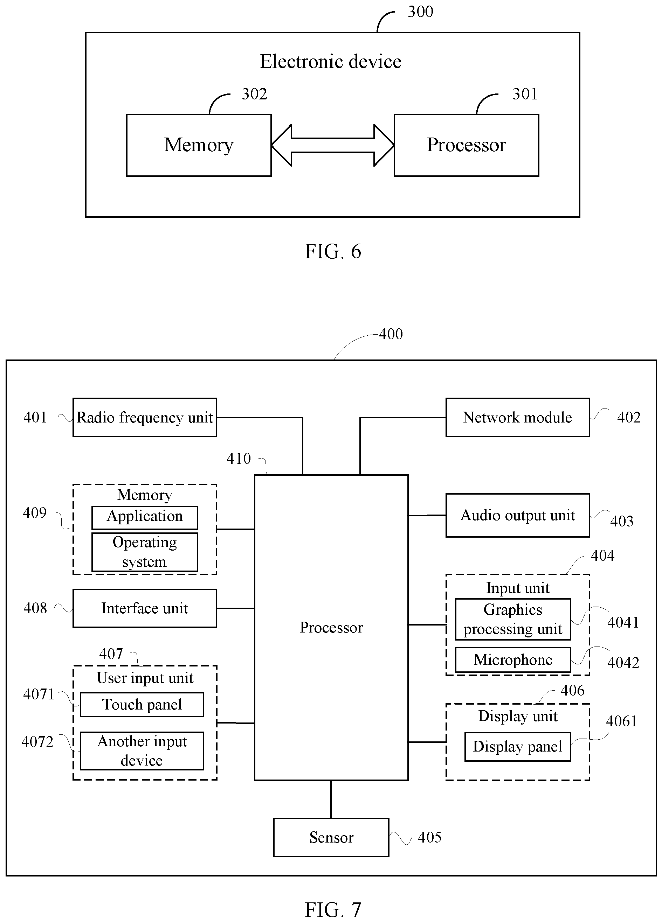

Optionally, as shown in FIG. 6, an embodiment of this application further provides an electronic device 300, including a processor 301, a memory 302, and a program or an instruction stored in the memory 302 and executable on the processor 301. When the program or the instruction is executed by the processor 301, each process of the content editing method embodiment can be implemented, and a same technical effect can be achieved. To avoid repetition, details are not repeated herein again.

It should be noted that the electronic device in the embodiments of this application includes the foregoing mobile electronic device and the foregoing non-mobile electronic device.

FIG. 7 is a schematic diagram of a hardware structure of an electronic device according to an embodiment of this application.

The electronic device 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

A person skilled in the art may understand that the electronic device 400 may further include a power supply (such as a battery) that supplies power to each component. The power supply may be logically connected to the processor 1010 through a power management system, to implement functions such as charging and discharging management, and power consumption management by using the power management system. The structure of the electronic device shown in FIG. 7 does not constitute a limitation on the electronic device. The electronic device may include more or fewer parts than those shown in the figure, or combine some components, or have different part arrangements. Details are not described herein again.

The user input unit 407 is configured to: in a case that a first edit box in a target interface is displayed, receive a first input of a user. The display unit 406 is configured to: in response to the first input received by the user input unit 407, in a case that the first input meets a preset condition, display a target window. The user input unit 407 is further configured to receive a second input of the user to an input method keyboard. The display unit 406 is further configured to: in response to the second input received by the user input unit 407, display, in the target window, first content, and display, in the first edit box, the content displayed in the target window, where a display size of the target window is greater than a display size of the first edit box.

Optionally, the display unit 406 is further configured to display at least one template, where each template in the at least one template corresponds to one edit mode. The user input unit 407 is further configured to receive a third input of the user to a target template in the at least one template. The processor 410 is further configured to: in response to the third input received by the user input unit 407, update an edit mode of the target window from a first edit mode to a second edit mode corresponding to the target template. The display unit 406 is specifically configured to: display the first content in the target window in the second edit mode, and display, in the first edit box, the first content displayed in the second edit mode.

Optionally, the user input unit 407 is further configured to receive a fourth input of the user. The display unit 406 is further configured to: in response to the fourth input received by the user input unit 407, display the first edit box, where the first content is displayed in the first edit box. The user input unit 407 is further configured to receive a fifth input of the user. The processor 410 is further configured to: in response to the fifth input received by the user input unit 407, send the first content through an application corresponding to the target interface. The display unit 406 is further configured to display the first content in the target interface.

Optionally, the target window includes a cursor, and the cursor is located in a first area in the target window. The display unit 406 is specifically configured to: display the first edit box, and display the cursor in a second area in the first edit box, where content displayed in the second area is the same as content displayed in the first area.

This embodiment of this application provides an electronic device. In a case that the edit box in the target interface is displayed, the user may trigger to display the target window through the input that meets the preset condition. Therefore, when the user triggers to display a particular piece of content in the target window through the input to the input method keyboard, the content displayed in the target window may be displayed in the edit box synchronously. In this way, when the user wants to edit relatively long content, the user only needs to trigger to edit required content in the target window, so that the electronic device can display, in the edit box of the target interface (for example, the chat interface) synchronously, the content displayed in the target window. Further, the user does not need to copy and paste the content into the edit box of the chat interface by triggering, in advance, to edit the content by using another edit-type application. In this way, an operation of editing relatively long content by the electronic device is simplified.

It should be understood that, in the embodiments of this application, the input unit 404 may include a graphics processing unit (graphics processing unit, GPU) 4041 and a microphone 4042, and the graphics processing unit 4041 processes image data of a still picture or a video obtained by an image capture apparatus (such as a camera) in a video capture mode or an image capture mode. The display unit 406 may include a display panel 4061. The display panel 4061 may be configured in a form such as a liquid crystal display or an organic light-emitting diode. The user input unit 407 includes a touch panel 4071 and another input device 4072. The touch panel 4071 is also referred to as a touchscreen. The touch panel 4071 may include two parts: a touch detection apparatus and a touch controller. The another input device 4072 may include but is not limited to a physical keyboard, a functional button (such as a volume control button or a power on/off button), a trackball, a mouse, and a joystick. Details are not described herein. The memory 409 may be configured to store a software program and various data, including but not limited to an application and an operating system. An application processor and a modem processor may be integrated into the processor 410, the application processor mainly processes an operating system, a user interface, an application, and the like, and the modem processor mainly processes wireless communication. It may be understood that, alternatively, the modem processor may not be integrated into the processor 410.

An embodiment of this application further provides a readable storage medium. The readable storage medium stores a program or an instruction, and when the program or the instruction is executed by a processor, each process of the foregoing content editing method embodiment is implemented and a same technical effect can be achieved. To avoid repetition, details are not described herein again.

The processor is a processor in the electronic device in the foregoing embodiment. The readable storage medium includes a computer-readable storage medium, such as a computer read-only memory (read-only memory, ROM), a random access memory (random access memory, RAM), a magnetic disk, or a compact disc, or the like.

An embodiment of this application further provides a chip. The chip includes a processor and a communication interface, the communication interface is coupled to the processor, and the processor is configured to run a program or an instruction to implement each process of the foregoing content editing method embodiment, and a same technical effect can be achieved. To avoid repetition, details are not described herein again.

It should be understood that the chip mentioned in the embodiments of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements that are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be reflected in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in each embodiment of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A content editing method, wherein the method comprises:
in a case that a first edit box in a target interface is displayed, receiving a first input of a user;
in response to the first input, in a case that a preset condition is met, displaying a target window;
receiving a second input of the user to an input method keyboard; and
in response to the second input, displaying, in the target window, first content corresponding to the second input, and displaying, in the first edit box, content displayed in the target window, wherein
a display size of the target window is greater than a display size of the first edit box.

2. The method according to claim 1, wherein after the displaying a target window, and before the receiving a second input of the user to an input method keyboard, the method further comprises:
displaying at least one template, wherein each template in the at least one template corresponds to one edit mode;
receiving a third input of the user to a target template in the at least one template; and
in response to the third input, updating an edit mode of the target window from a first edit mode to a second edit mode corresponding to the target template; and
the displaying, in the target window, first content corresponding to the second input, and displaying, in the first edit box, the content displayed in the target window comprises:
displaying the first content in the target window in the second edit mode, and displaying, in the first edit box, the first content displayed in the second edit mode.

3. The method according to claim 1, wherein after the displaying, in the first edit box, the content displayed in the target window, the method further comprises:
receiving a fourth input of the user;
in response to the fourth input, displaying the first edit box, wherein the first content is displayed in the first edit box;
receiving a fifth input of the user; and
in response to the fifth input, sending the first content through an application corresponding to the target interface, and displaying the first content in the target interface.

4. The method according to claim 3, wherein the target window comprises a cursor, and the cursor is located in a first area in the target window; and
the displaying the first edit box comprises:
displaying the first edit box, and displaying the cursor in a second area in the first edit box, wherein
content displayed in the second area is same as content displayed in the first area.

5. The method according to any one of claims 1 to 4, wherein the preset condition comprises any one of following:
the first input is a preset input to an input method area corresponding to the input method keyboard, and the first input is an input to a preset control; or
in a case that the first input is used to input second content to the first edit box, the preset condition comprises any one of following: a quantity of display rows of the second content is greater than or equal to a preset threshold of a quantity of display rows; and the second content comprises a preset identifier, wherein the preset identifier is used to indicate that the second content is templated text.

6. A content editing apparatus, wherein the content editing apparatus comprises a receiving module and a display module, wherein
the receiving module is configured to: in a case that a first edit box in a target interface is displayed, receive a first input of a user;
the display module is configured to: in response to the first input received by the receiving module, in a case that a preset condition is met, display a target window;
the receiving module is further configured to receive a second input of the user to an input method keyboard; and
the display module is further configured to: in response to the second input received by the receiving module, display, in the target window, first content corresponding to the second input, and display, in the first edit box, content displayed in the target window, wherein
a display size of the target window is greater than a display size of the first edit box.

7. The apparatus according to claim 6, wherein the display module is further configured to display at least one template, wherein each template in the at least one template corresponds to one edit mode;
the receiving module is further configured to receive a third input of the user to a target template in the at least one template;
the processing module is further configured to: in response to the third input received by the receiving module, update an edit mode of the target window from a first edit mode to a second edit mode corresponding to the target template; and
the display module is specifically configured to: display the first content in the target window in the second edit mode, and display, in the first edit box, the first content displayed in the second edit mode.

8. The apparatus according to claim 6, wherein the receiving module is further configured to receive a fourth input of the user;
the display module is further configured to: in response to the fourth input received by the receiving module, display the first edit box, wherein the first content is displayed in the first edit box;
the receiving module is further configured to receive a fifth input of the user;
the processing module is further configured to: in response to the fifth input received by the receiving module, send the first content through an application corresponding to the target interface; and
the display module is further configured to display the first content in the target interface.

9. The apparatus according to claim 8, wherein the target window comprises a cursor, and the cursor is located in a first area in the target window; and
the display module is specifically configured to: display the first edit box, and display the cursor in a second area in the first edit box, wherein
content displayed in the second area is same as content displayed in the first area.

10. The apparatus according to any one of claims 6 to 9, wherein the preset condition comprises any one of following: the first input is a preset input to an input method area corresponding to the input method keyboard, and the first input is an input to a preset control; or
in a case that the first input is used to input second content to the first edit box, the preset condition comprises any one of following: a quantity of display rows of the second content is greater than or equal to a preset threshold of a quantity of display rows; and the second content comprises a preset identifier, wherein the preset identifier is used to indicate that the second content is templated text.

11. An electronic device, comprising a processor, a memory, and a program or an instruction stored in the memory and executable on the processor, wherein when the program or the instruction is executed by the processor, steps of the content editing method according to any one of claims 1 to 5 are implemented.

12. A readable storage medium, wherein the readable storage medium stores a program or an instruction, and when the program or the instruction is executed by a processor, steps of the content editing method according to any one of claims 1 to 5 are implemented.

13. A computer program product, wherein the computer program product is stored in a non-volatile storage medium, and the computer program product is executed by at least one processor to implement steps of the content editing method according to any one of claims 1 to 5.

14. An electronic device, wherein the electronic device is configured to perform steps of the content editing method according to any one of claims 1 to 5.

15. A chip, wherein the chip comprises a processor and a communication interface, the communication interface is coupled to the processor, and the processor is configured to run a program or an instruction to implement steps of the content editing method according to any one of claims 1 to 5.
